# EUROPEAN PATENT SPECIFICATION

(11) **EP 3 798 531 B1**
(45) Date of publication and mention of the grant of the patent: **18.10.2023**
(21) Application number: 20196211.5
(22) Date of filing: 15.09.2020
(51) Int. Cl.: F24H 9/13, F28D 20/00

(54) **WATER HEATER COMPRISING A WATER GUIDE**
WASSERERHITZER MIT WASSERFÜHRUNG
CHAUFFE-EAU COMPRENANT UN GUIDE D'EAU

(30) Priority: 24.09.2019 TR 201914500
(43) Date of publication of application: 31.03.2021
(73) Proprietor: Vestel Beyaz Esya Sanayi ve Ticaret A.S., 45030 Manisa (TR)
(72) Inventor: AKDENIZ, Hekimhan, 45030 Manisa (TR); SARICA, Erdem, 45030 Manisa (TR)
(74) Representative: Cayli, Hülya

(56) References cited:
- WO-A1-2019/110996
- DE-A1- 4 301 725
- DE-A1- 19 754 586
- DE-U1- 9 200 824

## Description

### Technical Field

The present invention relates to water heaters, especially to a water guide, which directs the water coming from a cold water inlet of a water tank comprised by water heaters so that it does not mix with the hot water contained in the water tank, and to a water heater comprising the water guide.

### Background of the Invention

Currently, water heaters are used in various fields, which comprise water tanks in which cold water is received and heated such that ready-to-use hot water is stored and preserved. Said water heaters further comprise a water inlet for receiving cold water into the water tank, which is located at a lower part of the water tank close to a base thereof; a heating apparatus (e.g. a resistance) for heating the cold water received; and a water outlet for discharging the water that is heated by the heating apparatus. The water outlet is located at an upper part of the tank or a hot water delivery unit enables the hot water contained in the upper part of the tank to be discharged through the water outlet, for example, by means of a hot water pipe. A user can discharge a desired amount of water through the water outlet, in which case cold water is introduced to the water tank through the water inlet in return for the discharged water. The cold water received accumulates at the lower part of the water tank due to the density while the hot water is contained in the upper part. Thus, it is ensured that hot water in the upper part of the water tank does not mix with the cold water received as much as possible and it is not affected by the cold water received. In electric water heaters comprising a water tank, in order to use stored hot water effectively, it is desirable that the cold water received into the water tank when the hot water is discharged from the water tank does not mix with the hot water remaining in the water tank. However, since the water inlet located at the base of the water tank introduces water into the water tank in vertical direction and with high flow rate, hot water and cold water cannot be prevented from mixing with each other. An exemplary water heater of this type is disclosed in DE9200824U1. Said water heater comprises a storage tank, a cold water inlet located at the lower part of the storage tank, hot water outlet located in an upper part of the storage tank and a heating element that heats the water inside the storage tank. However, in this water heater, cold water supplied by the water inlet mixes with the hot water due to its speed.

### Brief Description of the Invention

According to the present invention, there is provided a water heater comprising the features as defined by claim 1.

The water guide of present invention slows down the outlet speed of the water thanks to the outlet pipe having a widening diameter, and directs the cold water towards the base of the water tank such that it is directed parallel to the side wall and with a single flow passage, thanks to the neck. Therefore, it is enabled that hot water contained in the water tank and the cold water received into the water tank are separate from each other and do not mix with each other.

### Object of the Invention

An object of the present invention is to provide a water heater comprising a water guide, wherein the water guide is connected to a water inlet of water heaters comprising a water tank and enables the cold water received into the water tank through the water inlet to be directed into the base of the water tank.

Another object of the present invention is to provide a water heater comprising the water guide, wherein the water guide enables the cold water received into the water tank through the water inlet to be directed into the base of the water tank such that its flow rate is reduced.

A further object of the present invention is to provide a water heater comprising the water guide, wherein the water guide allows cold water received into the water tank to spread to the base of the water tank through a single opening.

Yet a further object of the present invention is to provide a water heater comprising the water guide, wherein the water guide enables the cold water received into the water tank to perform a radial movement around the heater provided in the water tank, thus preventing the cold water from moving upwards.

Another object of the present invention is to provide a cost-effective, easy-to-use, practical and reliable water heater comprising the water guide

### Description of the Invention

Exemplary embodiments of a water heater comprising the water guide according to the present invention are illustrated in the attached drawings, in which:
Figure 1 is a perspective view of the water guide.
Figure 2 is a sectional view of the water heater comprising the water guide according to the invention.
Figure 3 is top sectional view of the water heater comprising the water guide according to the invention.

All the parts illustrated in figures are individually assigned a reference numeral and the corresponding terms of these numbers are listed below:

| | |
|---|---|
| Water tank | (1) |
| Base | (1a) |
| Roof | (1b) |
| Side wall | (1c) |
| Water inlet | (2) |
| Water outlet | (3) |
| Hot water pipe | (4) |
| Heating apparatus | (5) |
| Water guide | (6) |
| Inlet pipe | (6a) |
| Neck | (6b) |
| Outlet pipe | (6c) |
| First inlet opening | (6d) |
| Second outlet opening | (6e) |
| Lower part | (7) |
| Upper part | (8) |
| Flow direction | (9) |
| First angle | (10) |
| Second angle | (11) |
| Middle axis | (12) |
| Centre | (13) |
| Line | (14) |

### Description of the Invention

Water heaters may comprise water tanks in which cold water is received, heated and stored; and a user can discharge a desired amount of hot water from the water tank. Cold water is introduced into the water tank in return for the discharged hot water. In order to use hot water stored in the water tank effectively, it is desirable that the cold water received into the water tank does not mix with the hot water contained in the water tank. However, since the water inlet located at the base of the water tank provides water flow towards the upper part of the water tank with a high flow rate, it is not possible to keep hot water at the upper part of the water tank without mixing with cold water. Within this context, according to the present invention, there is provided a water heater comprising a water guide, which eliminates abovementioned problems.

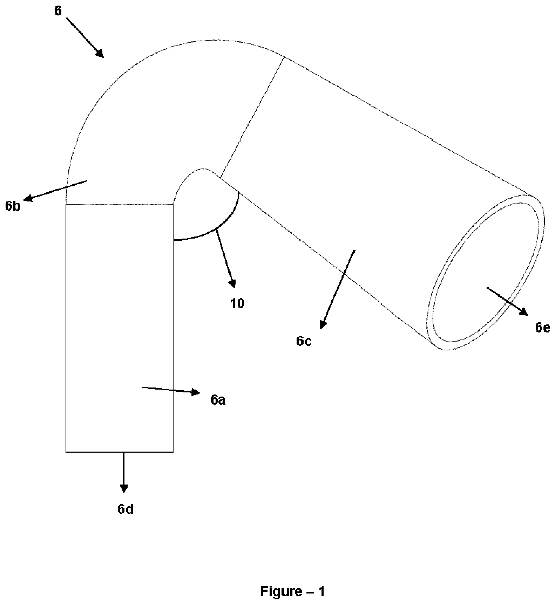

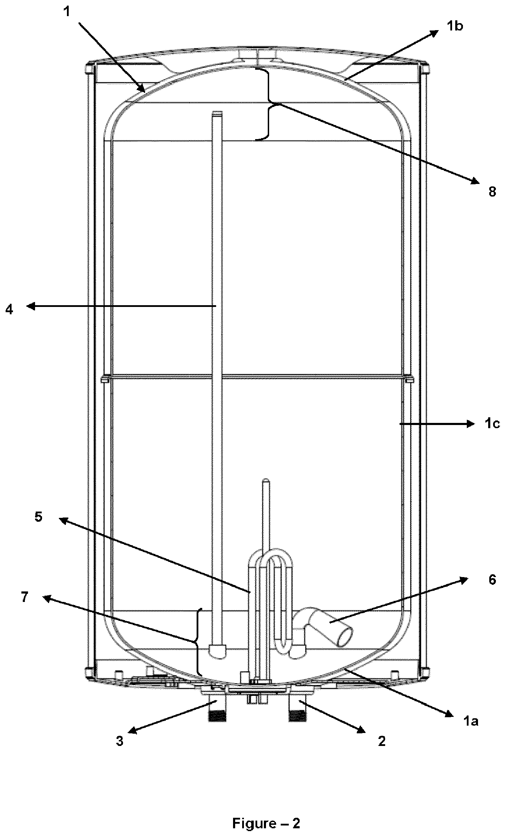

The water guide (6), as illustrated in Figures 1-3, is used in a water heater according to the invention which comprises at least one water tank (1) having at least one base (1a), at least one roof (1b) and at least one side wall (1c); at least one water inlet (2) located at the base (1a) of the water tank (1) and introducing cold water into the water tank (1) at a first flow rate; at least one heating apparatus (5), e.g. a resistance, for heating cold water received into the water tank (1), which is mounted to the base (1a) of the water tank (1); and at least one water outlet (3) for receiving water from an upper part (8) of the water tank (1) close to the roof (1b) thereof so that the water is discharged, wherein the water guide (6) comprises at least one inlet pipe (6a) comprising at least a first inlet opening (6d) and at least a first outlet opening (not illustrated in the figures), and being connected to the water inlet (2) through the first inlet opening (6d) so as to extend perpendicularly from the base (1a) towards the inner side of the water tank (1), wherein diameters of the first inlet opening (6d) and the first outlet opening are equal to each other; at least one outlet pipe (6c) comprising a second inlet opening (not illustrated in the figures) and a second outlet opening (6e), wherein diameter of the second outlet opening (6e) is higher than the second inlet opening and thus the outlet pipe (6c) enables the water introduced through the second inlet opening and passing through the outlet pipe (6c) to exit through the second outlet opening (6e) such that its flow rate is reduced; and at least one neck (6b) which connects the first outlet opening and second inlet opening to each other such that a first angle (10) less than 90° is provided between the inlet pipe (6a) and the outlet pipe (6c), and thus, enables the water from the water inlet (2) to be directed to the base (1a) of the water tank (1) at a second flow rate lower than first flow rate.

The water heater heats the cold water, which is received from the water inlet (2) located at the base (1a) of the water tank (1), by means of the heating apparatus (5). Heated water moves upward such that there is water at a ready-to-use temperature in the upper part (8) of the water tank (1) while the relatively cold water is contained in the lower part (7) of the water tank (1). The water outlet (3) provides water discharge from the upper part (8) of the water tank (1) close to the roof (1b), so that the hot water contained in the water tank (1) can be discharged by the user. Here, the lower part (7) close to the base may be defined as the area between a middle part and the base (1a) of the water tank (1) or the area up to a few centimetres above the base (1a) or the area up to a maximum of 30 centimetres above the base (1a), depending on dimensions of the water tank (1). Likewise, the upper part (8) of the water tank (1) close to the roof (1b) may be defined as the area between a middle part and the roof (1b) of the water tank (1) or the area up to a few centimetres below the roof (1b) or the area up to a maximum of 30 centimetres below the roof (1b), depending on dimensions of the water tank (1). The water guide (6) is connected to the water inlet (2), which is located at the base (1a) of the water tank (1), through the first inlet opening (6d). The water inlet (2) may be, for example, an opening or a pipe that is connected to a water supply line and enables mains water to be introduced into the water tank (1). The water coming from the water inlet (2) at a first flow rate is introduced into the inlet pipe (6a) through the first inlet opening (6d). The inlet pipe (6a) has a cylindrical form and is connected to the water inlet (2) so as to extend perpendicularly to the inner side of the water tank (1). After moving through the inlet pipe (6a), the water then passes through the first outlet opening into the neck (6b), where the direction of the water changes and thus the water introduced into the water tank (1) in the vertical direction is directed towards the base (1a). Water leaving the neck (6b) then reaches the outlet pipe (6c) by passing through the second inlet opening. The outlet pipe (6c) has a conical structure and a widening diameter, so that a flow rate of water introduced through the second inlet opening is reduced and the water exits through the second outlet opening (6e) at a second flow rate lower than the first flow rate such that it moves towards the base (1a) as a single water passage. By reducing the flow rate of water and directing it as a single water passage towards the base (1a) of the water tank, it is ensured that the hot water contained in the water tank (1) and the cold water introduced into the water tank (1) do not mix with each other or mix at a minimum level.

In a preferred embodiment of the invention, the diameter of the first outlet opening is equal to the diameter of the second inlet opening. In said embodiment, the water passing through the neck (6b) is directed without changing its flow rate. In a preferred embodiment of the invention, the neck (6b) and the outlet pipe (6c) are integral. In said embodiment, the integral part comprising the neck (6b) and the outlet pipe (6c) is connected to the first outlet opening of the inlet pipe (6a). In another preferred embodiment of the invention, the water inlet pipe (6a) and the neck (6b) are integral; and in said embodiment, the outlet pipe (6c) is connected to the outlet of the integral part which is connected to the water inlet (2) through the first inlet opening (6d) and comprises the water inlet pipe (6a) and the neck (6b). Yet in another preferred embodiment of the invention, the inlet pipe (6a), the neck (6b) and the outlet pipe (6c) are integral.

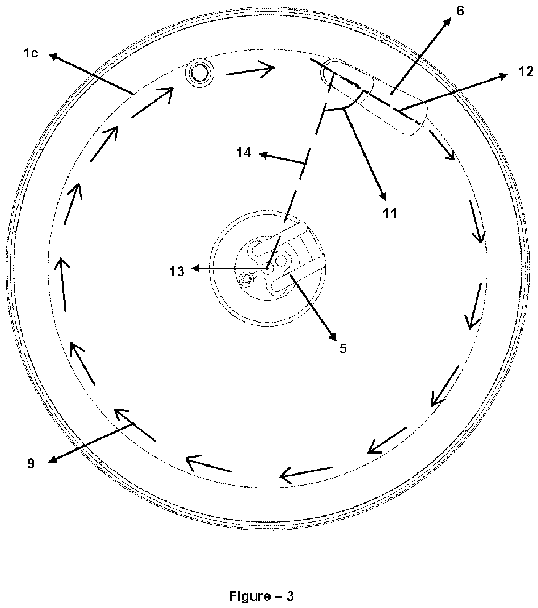

According to the present invention, there is provided a water heater comprising the water guide (6). A preferred embodiment of the invention is illustrated in Figure 3; and in said embodiment, the side wall (1c) has a cylindrical structure and the water guide (6) is mounted to the water inlet (2) such that the water exiting through the second outlet opening (6e) is directed parallel to the side wall (1c). Therefore, the cold water is enabled to move in a circular flow direction (9) and parallel to the side wall (1c), so that it is prevented from moving upwards. In said embodiment, there is a second angle (11) higher than 45° and lower than 90° between a middle axis (12) of the outlet pipe (6c) and a line (14) extending from the centre (13) of the water tank towards the water inlet (2). In another preferred embodiment of the invention, the heating apparatus (5) is located at the centre (13) of the base (1a), so that the cold water is enabled to move circularly around the heating apparatus (5).

In a preferred embodiment of the invention, the water outlet (3) may be located at an upper part (8) of the water tank (1) close the roof (1b) thereof or at the roof (1b) thereof, so that the hot water contained at the upper part (8) of the water tank (1) is discharged. In another preferred embodiment of the invention, the water outlet (3) may be located at the base (1a) of the water tank (1) or at the lower part (7) thereof close to the base (1a), in which case at least one hot water pipe (4) enables the hot water contained in the upper part (8) of the water tank (1) to be delivered to the water outlet (3) such that it is discharged by the user if desired, wherein one end of the hot water pipe (4) is connected to the water outlet (3) and another end thereof communicates into the upper part (8) of the water tank (1) close to the roof (1b).

The water guide (6) of the present invention slows down the outlet speed of the water thanks to the outlet pipe (6c) having a widening diameter, and directs the cold water towards the base (1a) of the water tank (1) such that it is directed parallel to the side wall (1c) and with a single flow passage, thanks to the neck (6b). Therefore, it is enabled that hot water contained in the water tank (1) and the cold water received into the water tank (1) are separate from each other and do not mix with each other.

## Claims

1. A water heater comprising at least one water tank (1) having at least one base (1a), at least one roof (1b) and at least one side wall (1c); at least one water inlet (2) located at the base (1a) of the water tank (1) and introducing cold water into the water tank (1) at a first flow rate; at least one heating apparatus (5) for heating cold water received into the water tank (1), which is mounted to the base (1a) of the water tank (1); and at least one water outlet (3) for receiving water from an upper part (8) of the water tank (1) close to the roof (1b) thereof so that the water is discharged, and a water guide (6) **characterized in that** said water guide (6) comprises at least one inlet pipe (6a) comprising at least a first inlet opening (6d) and at least a first outlet opening whose diameters are equal to each other, and being connected to the water inlet (2) through the first inlet opening (6d) so as to extend perpendicularly from the base (1a) towards the inner side of the water tank (1); at least one outlet pipe (6c) comprising a second inlet opening and a second outlet opening (6e) whose diameter is higher than the second inlet opening, and thus enabling the flow rate of water passing through the outlet pipe (6c) to be reduced; and at least one neck (6b) which connects the first outlet opening and second inlet opening to each other such that a first angle (10) less than 90° is provided between the inlet pipe (6a) and the outlet pipe (6c), and thus, enables the water from the water inlet (2) to be directed to the base (1a) of the water tank (1) at a second flow rate lower than first flow rate.

2. A water heater according to claim 1, **characterized in that** the diameter of the first outlet opening and the diameter of the second inlet opening are equal to each other.

3. A water heater according to claim 1, **characterized in that** the neck (6b) and the outlet pipe (6c) are integral.

4. A water heater according to claim 1, **characterized in that** the water inlet pipe (6a) and the neck (6b) are integral.

5. A water heater according to claim 1, **characterized in that** the inlet pipe (6a), the neck (6b) and the outlet pipe (6c) are integral.

6. A water heater according to any one of the preceding claims, **characterized in that** the side wall (1c) has a cylindrical structure and the water guide (6) is mounted to the water inlet (2) such that the water exiting through the second outlet opening (6e) is directed parallel to the side wall (1c).

7. A water heater according any one of the preceding claims, **characterized in that** the heating apparatus (5) is located at the centre (13) of the base (1a).

8. A water heater according to any one of the preceding claims, **characterized by** comprising at least one hot water pipe (4), one end of which is connected to the water outlet (3) and another end of which communicates into the upper part (8) of the water tank (1) close to the roof (1b).

## Patentansprüche

1. Wassererhitzer mit wenigstens einem Wassertank (1), der wenigstens eine Bodenwand (1a), wenigstens eine Oberwand (1b) und wenigstens eine Seitenwand (1c) hat; wenigstens einem Wassereinlass (2), der sich an der Bodenwand (1a) des Wassertanks (1) befindet und durch den kaltes Wasser mit einem ersten Durchsatz in den Wassertank (1) eingeführt wird; wenigstens einer Heizvorrichtung (5) zum Erhitzen des in den Wassertank (1) aufgenommenen kalten Wassers, die an der Bodenwand (1a) des Wassertanks (1) angebracht ist; und wenigstens einem Wasserauslass (3) zum Aufnehmen von Wasser aus einem oberen Teil (8) des Wassertanks (1) nahe der Oberwand (1b), so dass das Wasser abgeleitet wird, und wenigstens einer Wasserführung (6), **dadurch gekennzeichnet, dass** die Wasserführung (6) wenigstens eine Einlassleitung (6a), die wenigstens eine erste Einlassöffnung (6d) und wenigstens eine erste Auslassöffnung hat, deren Durchmesser gleich sind, und die durch die erste Einlassöffnung (6d) mit dem Wassereinlass (2) verbunden ist, um so senkrecht von der Bodenwand (1a) in das Innere des Wassertanks (1) zu verlaufen, wenigstens eine Auslassleitung (6c), die eine zweite Einlassöffnung und eine zweite Auslassöffnung (6e) hat, deren Durchmesser größer als der der zweiten Einlassöffnung ist, und die es daher ermöglicht, dass der Durchsatz von Wasser durch die Auslassleitung (6c) reduziert wird; und wenigstens ein Halsstück (6b) aufweist, das die erste Auslassöffnung mit der zweiten Einlassöffnung verbindet, so dass ein erster Winkel (10) von weniger als 90° zwischen der Einlassleitung (6a) und der Auslassleitung (6c) gebildet ist, und das es daher ermöglicht, das Wasser aus dem Wassereinlass (2) mit einem zweiten Durchsatz zur Bodenwand (1a) des Wassertanks (1) zu richten, der geringer als der erste Durchsatz ist.

2. Wassererhitzer nach Anspruch 1, **dadurch gekennzeichnet, dass** der Durchmesser der ersten Auslassöffnung und der Durchmesser der zweiten Einlassöffnung einander gleich sind.

3. Wassererhitzer nach Anspruch 1, **dadurch gekennzeichnet, dass** das Halsstück (6b) und die Auslassleitung (6c) aus einem Stück sind.

4. Wassererhitzer nach Anspruch 1, **dadurch gekennzeichnet, dass** die Wassereinlassleitung (6a) und das Halsstück (6b) aus einem Stück sind.

5. Wassererhitzer nach Anspruch 1, **dadurch gekennzeichnet, dass** die Einlassleitung (6a), das Halsstück (6b) und die Auslassleitung (6c) aus einem Stück sind.

6. Wassererhitzer nach einem der vorhergehenden Ansprüche, **dadurch gekennzeichnet, dass** die Seitenwand (1c) eine zylindrische Struktur hat und dass die Wasserführung (6) so an dem Wassereinlass (2) montiert ist, dass das durch die zweite Auslassöffnung (6e) austretende Wasser parallel zu der Seitenwand (1c) gerichtet ist.

7. Wassererhitzer nach einem der vorhergehenden Ansprüche, **dadurch gekennzeichnet, dass** die Heizvorrichtung (5) im Zentrum (13) der Bodenwand (1a) angeordnet ist.

8. Wassererhitzer nach einem der vorhergehenden Ansprüche, **dadurch gekennzeichnet, dass** sie wenigstens eine Heißwasserleitung (4) aufweist, deren eines Ende mit dem Wasserauslass (3) verbunden ist und deren anderes Ende mit dem oberen Teil (8) des Wassertanks (1) nahe der Oberwand (1b) kommuniziert.

## Revendications

1. Chauffe-eau comprenant au moins un réservoir d'eau (1) ayant au moins une base (1a), au moins un toit (1b) et au moins une paroi latérale (1c) ; au moins une entrée d'eau (2) située à la base (1a) du réservoir d'eau (1) et introduisant de l'eau froide dans le réservoir d'eau (1) à un premier débit ; au moins un appareil de chauffage (5) pour chauffer l'eau froide reçue dans le réservoir d'eau (1), qui est monté à la base (1a) du réservoir d'eau (1) ; et au moins une sortie d'eau (3) pour recevoir l'eau d'une partie supérieure (8) du réservoir d'eau (1) près du toit (1b) de celui-ci afin que l'eau soit évacuée, et un guide d'eau (6) **caractérisé en ce que** ledit guide d'eau (6) comprend au moins un tuyau d'entrée (6a) comprenant au moins une première ouverture d'entrée (6d) et au moins une première ouverture de sortie dont les diamètres sont égaux l'un par rapport à l'autre, et relié à l'entrée d'eau (2) par la première ouverture d'entrée (6d) de manière à s'étendre perpendiculairement de la base (1a) vers le côté intérieur du réservoir d'eau (1) ; au moins un tuyau de sortie (6c) comprenant une seconde ouverture d'entrée et une seconde ouverture de sortie (6e) dont le diamètre est supérieur à la seconde ouverture d'entrée, et permettant ainsi de réduire le débit d'eau traversant le tuyau de sortie (6c) ; et au moins un col (6b) qui relie la première ouverture de sortie et la seconde ouverture d'entrée l'une à l'autre de telle sorte qu'un premier angle (10) inférieur à 90° est pourvu entre le tuyau d'entrée (6a) et le tuyau de sortie (6c), et permet ainsi à l'eau provenant de l'entrée d'eau (2) d'être dirigée vers la base (1a) du réservoir d'eau (1) à un second débit inférieur au premier débit.

2. Chauffe-eau selon la revendication 1, **caractérisé en ce que** le diamètre de la première ouverture de sortie et le diamètre de la seconde ouverture d'entrée sont égaux l'un à l'autre.

3. Chauffe-eau selon la revendication 1, **caractérisé en ce que** le col (6b) et le tuyau de sortie (6c) sont solidaires.

4. Chauffe-eau selon la revendication 1, **caractérisé en ce que** le tuyau d'entrée d'eau (6a) et le col (6b) sont solidaires.

5. Chauffe-eau selon la revendication 1, **caractérisé en ce que** le tuyau d'entrée (6a), le col (6b) et le tuyau de sortie (6c) sont solidaires.

6. Chauffe-eau selon l'une quelconque des revendications précédentes, **caractérisé en ce que** la paroi latérale (1c) a une structure cylindrique et que le guide d'eau (6) est monté sur l'entrée d'eau (2) de telle sorte que l'eau sortant par la seconde ouverture de sortie (6e) est dirigée parallèlement à la paroi latérale (1c).

7. Chauffe-eau selon l'une quelconque des revendications précédentes, **caractérisé en ce que** l'appareil de chauffage (5) est situé au centre (13) de la base (1a).

8. Chauffe-eau selon l'une quelconque des revendications précédentes, **caractérisé par** la présence d'au moins un tuyau d'eau chaude (4) dont une extrémité est reliée à la sortie d'eau (3) et dont une autre extrémité communique avec la partie supérieure (8) du réservoir d'eau (1) à proximité du toit (1b).
